# EUROPÄISCHE PATENTSCHRIFT

(11) **EP 1 801 175 B1**
(45) Veröffentlichungstag und Bekanntmachung des Hinweises auf die Patenterteilung: **10.05.2017**
(21) Anmeldenummer: 06023968.8
(22) Anmeldetag: 19.11.2006
(51) Int. Cl.: C09D 175/04

(54) **Beschichtungsmaterial und Herstellungsverfahren einer Beschichtung**
Coating material and process for manufacturing coating
Matériau de revêtement et procédé de fabrication correspondant

(30) Priorität: 23.12.2005 DE 102005062535
(43) Veröffentlichungstag der Anmeldung: 27.06.2007
(73) Patentinhaber: Schattdecor AG, 83101 Thansau (DE)
(72) Erfinder: Eibeck, Kornelia, 65201 Wiesbaden (DE); Berger, Erich, 7537 Müstair (CH); Botzem, Ulrike, 63755 Alzenau (DE)
(74) Vertreter: Fuchs Patentanwälte Partnerschaft mbB

(56) Entgegenhaltungen:
- EP-A- 1 484 349
- DE-A1- 4 407 409
- DE-A1- 19 654 296
- DE-A1- 19 949 971

## Beschreibung

Die Erfindung betrifft eine flexible, dekorative Folie, mit einer Trägerbahn und einer Beschichtung aus einem Beschichtungsmaterial, und eine Verwendung einer flexiblen, dekorativen Folie.

Dokument DE 199 49 971 A1 beschreibt Polyurethan-Hybrid-Dispersionen zur Herstellung von Sportbodenbelägen. Es wird offenbart, dass polyurethanbasierende Sportbodenbeläge üblicherweise auf Substrate wie Asphalt, zementgebundenen Untergründen, Holz und Holzestrich aufgebracht werden. In dem Dokument findet sich kein Hinweis auf abriebfeste Partikel. Im Gegenteil, da der Einsatz der Polyurethan-Hybrid-Dispersionen als Sportbodenbelag vorgeschlagen wird, erfährt der Fachmann, dass die Dispersionen an sich bereits eine vorteilhafte Abriebfestigkeit garantieren, so dass ein Zusatz von abriebfesten Partikeln nicht benötigt wird. Somit bestand ausgehend von DE 199 49 971 A1 keine Veranlassung, flexible Folien bereitzustellen, die mit einem Beschichtungsmaterial beschichtet sind, das abriebfeste Partikel umfasst. Außerdem lehrt DE 199 49 971 A1 die Beschichtung von äußerst starren Substraten wie Asphalt oder Beton. Einen Hinweis auf flexible Folien, die eine besonders leichte und kostengünstige Substratbeschichtung ermöglichen und aufgrund ihrer hohen Flexibilität auch zur Ummantelung von Möbeloberflächen oder Leisten geeignet sind, erhält der Fachmann nicht.

Bekannt ist es, Beschichtungen für Möbel herzustellen, die auf Folien aufgetragen sind. Diese Beschichtungen sind jedoch sehr dünn und nicht stark belastbar.

Aufgabe der vorliegenden Erfindung ist es, eine Folie mit einer Beschichtung bereitzustellen, die einer hohen mechanischen Belastung, insbesondere einer Trittbelastung, insbesondere durch eine hohe Abriebfestigkeit standhält und zugleich sehr elastisch ist.

Als Ergebnis der Untersuchungen der Erfinder ist vorteilhaft ein Beschichtungsmaterial mit Einzelkomponenten, wobei das Beschichtungsmaterial mit einer Schichtstärke von etwa 10 g/m² bis 180 g/m², insbesondere etwa 30 g/m² bis 150 g/m², auf eine Trägerbahn aufzubringen ist, wobei die Komponenten vor Beschichtung zu vermischen sind und bei Beschichtung eine elastische Beschichtung liefern, wobei die Komponenten wie folgt zusammengesetzt sind: eine erste Komponente mit einer wasserverdünnbaren, -OH gruppenhaltigern Harzlösung und/oder einer -OH gruppenhaltigen Harzdispersion und/oder einer wasserverdünnbaren, -OH gruppenhaltigen Harzemulsion, insbesondere einer Acrylatemulsion, insbesondere einer wässrigen Dispersion eines elastischen Polyacrylat-Copolymerisats, eine zweite Komponente mit einem wasseremulgierbaren Polyisocyanatharz, wobei das Polyisocaynat einen Gewichtsanteil von etwa 10 % bis 100 %, insbesondere etwa 50 bis 100% an der zweiten Komponente hat, und eine dritte Komponente und/oder Additiv zu der ersten und/oder zweiten Komponente, aufweisend Aluminium- und/oder Zirkonoxid und/oder Wolfram- und/oder Siliciumcarbid, wobei Aluminium- und/oder Zirkonoxid und/oder Wolfram- und/oder Siliciumcarbid insbesondere einen Gewichtsanteil von etwa 100 % an der dritten Komponente hat/haben.

Ebenfalls vorteilhaft ist ein Beschichtungsmaterial mit Einzeikomponenten, wobei Beschichtungsmaterial mit einer Schichtstärke von etwa 10 g/m² bis 180 g/m², insbesondere etwa 30 g/m² bis 150 g/m², auf eine Trägerbahn aufzubringen ist, wobei die Komponenten vor Beschichtung zu vermischen sind und bei Beschichtung eine elastische Beschichtung liefern, wobei die Komponenten wie folgt zusammengesetzt sind: eine erste Komponente mit einem wässrigen, elastischen Epoxidharz, eine zweite Komponente mit einem wasseremulgierbarem Polyisocyanatharz und/oder einem polyfunktionalen Amin und/oder einem Aminoharz, und eine dritte Komponente und/oder Additiv zu der ersten und/oder zweiten Komponente, aufweisend Aluminium- und/oder Zirkonoxid und/oder Wolfram- und/oder Siliciumcarbid, wobei Aluminium- und/oder Zirkonoxid und/oder Wolfram- und/oder Siliciumcarbid insbesondere einen Gewichtsanteil von etwa 100 % an der dritten Komponente hat/haben.

Die Beschichtungsmaterialien sind einfach zusammertzumischen und liefern nach einem schichtartigen Auftrag, der mit unterschiedlichen Verfahren vorgenommen werden kann, eine hochelastische und zugleich beständige und wiederstandsfähige, Oberfläche mit einer hohen Schichtdicke, die auch Trittbelastungen oder schweren Gegenständen auf der Trägerbahn standhält. Es wird eine Herstellung eines elastischen, hochabriebfesten Films durch Beschichtung eines Trägermaterials mit einem wässrigen Beschichtungsstoff vorgeschlagen, wobei die zugrundeliegende Polymermatrix, die mit der wässrigen Umsetzungskomponente vernetzt wird und eine eingefügte mechanische Stärkungskomponente aufweist, sowohl alle chemischen als auch mechanischen Eigenschaften erfüllt, um hohen Belastungen standzuhalten und zugleich dekorative Oberflächen zu bilden. Eine mit dem Beschichtungsmaterial beschichtete Trägerbahn kann in beliebigen Dekormustern bedruckt sein. Darüber hinaus sind die Beschichtungsmaterialien im wesentlichen, insbesondere vollständig wasserverdünnbar hergestellt, so dass sie besonders umweltschonend sind.

Die Schichtstärkenangaben in dieser Erfindung können insbesondere als Dickenangaben für den im wesentlichen trockenen Zustand angesehen werden.

Ebenfalls vorteilhaft ist ein Beschichtungsmaterial mit Einzelkomponenten, wobei Beschichtungsmaterial mit einer Schichtstärke von etwa 10 g/m² bis 180 g/m², insbesondere etwa 30 g/m² bis 150 g/m², auf eine Trägerbahn aufzubringen ist, wobei die Komponenten vor Beschichtung zu vermischen sind und bei Beschichtung eine elastische Beschichtung liefern, wobei die Komponenten wie folgt zusammengesetzt sind: eine erste Komponente mit -OH gruppenhaltigen Acrylatharz und/oder Hydroxylpolyesterharz, eine zweite Komponente mit Polyisocyanatharz, und eine dritte Komponente und/oder Additiv zu der ersten und/oder zweiten Komponente, aufweisend Aluminium- und/oder Zirkonoxid und/oder Wolfram- und/oder Siliciumcarbid, wobei Aluminium- und/oder Zirkonoxid und/oder Wolfram- und/oder Siliciumcarbid insbesondere einen Gewichtsanteil von etwa 100 % an der dritten Komponente hat/haben.

Hierdurch wir ebenfalls ein sehr elastisches und wiederstandsfähiges Oberflächenmaterial geliefert, dass auf einem Träger aufgebracht auch starken Belastungen standhält und zugleich gute dekorative Eigenschaften hat.

Vorteilhaft ist es, wenn die erste Komponente ein Polyacrylat aufweist, aufgebaut aus einem oder mehreren der Monomere Ethylacrylat, Butylacrylat, Styrol, Hydroxyethylmethacrylat und Hydroxiethylacrylat. Vorteilhaft ist es, wenn das Polyacrylat eine oder mehrere der folgenden funktionellen Gruppen aufweist: Hydroxyl, Methylol, Carboxyl und Amino.

Die Beschichtung härtet schneller aus und wird homogener, wenn die erste Komponente Reaktionsbeschleuniger und/oder Emulgatoren aufweist.

Die Beschichtung enthält nahezu keine Blasen und wird gleichmäßiger auf dem Träger verteilt, wenn die erste Komponente Additive aufweist, insbesondere Wachse und/oder Verlaufmittel und/oder Entschäumer und/oder Mattierungsmittel

Eine sehr große Widerstandskraft gegen hohe Belastungen liegt vor, wenn die erste Komponente nach Umsetzung mit dem Polyisocyanat der zweiten Komponente eine flexible Schicht mit Schichtstärken von etwa 30 g/m² bis 150 g/m² bildet. Insbesondere durch die hohen Schichtstärken, die sich durch die vorgeschlagene Zusammensetzung bilden lassen, ist einerseits eine hohe Elastizität gewährleistet und andererseits auch eine gute Trittfestigkeit und beschädigungsfreie Benutzung des Belags.

Vorteilhaft ist es, wenn die erste Komponente einen Gewichtsanteil an der Beschichtung von etwa 40 % bis 80 %, die zweite Komponente einen Anteil von etwa 5 % bis 40 % und eine dritte Komponente einen Anteil von etwa 10 % bis 40 % aufweist.

Hohe Umweltverträglichkeit insbesondere im Herstellungsprozess ist gegeben, wenn die erste und/oder die zweite und/oder die dritte Komponente ohne Verwendung organischer Lösungsmittel herzustellen sind.

Die Aufgabe wird gelöst durch eine flexible, dekorative Folie, mit einer Trägerbahn und einer Beschichtung aus einem Beschichtungsmaterial entsprechend einem der Ansprüche 1 bis 8, wobei die beschichtete Folie eine Schichtstärke der Beschichtung von etwa 10 g/m² bis 180 g/m², insbesondere etwa 30 g/m² bis 150 g/m², aufweist. Die flexible, dekorative Folie hergestellt durch Beschichtung einer Trägerbahn mit einer wässrigen Mehrkomponenten-Beschichtungsmasse kann aufgrund der hohen Abriebfestigkeit und zugleich großen Flexibilität zum Verpressen, Kaschieren, Laminieren und Ummanteln von Holzwerkstoffen eingesetzt werden.

Die Trägerbahn erlaubt es, sehr großflächige Beschichtungen zu erzeugen und beispielsweise als Fußbodenbeläge einzusetzen, da auch bei dieser Größenordnung die Belastbarkeit der Beschichtungen standhält und einen dauerhaften Einsatz ermöglicht. Durch die Trägerbahnen ist zudem die Herstellung individuell angepasster, insbesondere auch einstückiger Belaggrößen möglich. Die hohe Schichtstärke ist aufgrund der zugleich großen Elastizität der Trägerbahn und der Beschichtung einfach zu handhaben. Vorteilhaft wird die beschichtete Folie auch auf Holzträgerplatten verpresst, insbesondere auf Spanplatten, MDF-Platten HDF-Platten im Sinne eines laminatähnlichen Bodenbelags.

Eine dauerhaft ansprechender und haltbarer Belag ist insbesondere gegeben, wenn die Trägerbahn eine zur Herstellung einer beschichteten Folie vorbestimmte Elastizität, Lichtechtheit und Bedruckbarkeit aufweist.

Die Trägerbahn besteht aus Papier, das ein Gewicht von etwa 25 bis 300 g/m², insbesondere weniger als etwa 70 g/m², insbesondere etwa 45 g/m² bis 60 g/m², aufweist.

Ein Ausfasern des Papiers wird verhindert, wenn die Trägerbahn aus Papier vor der Beschichtung zu imprägnieren ist, insbesondere mit Harz, Melamin, Harnstoffformaldehyd, Acrylat oder Mischungen daraus, insbesondere auf einer Papiermaschine oder Ausrüstungsanlage während der Papierherstellung zu vorimprägnieren und/- oder auf einer Imprägnier- oder Beschichtungsanlage nach der Papierherstellung zu postimprägnieren ist.

Ein zusätzliche Schutz ist mögliche, wenn die Folie nach der Beschichtung mit dem Beschichtungsmaterial mit einem säurehärtenden und/oder isocyanatvemetzenden und/oder strahlungshärtenden Oberflächenlack zu decklackieren ist.

Ebenfalls vorteilhaft ist ein Herstellungsverfahren einer Beschichtung aus einem Beschichtungsmaterial, auf eine Trägerbahn, zur Herstellung einer flexiblen, dekorativen Folie, wobei die Einzelkomponenten des Beschichtungsmaterials gemischt werden und mittels Gießen und/oder Drucken und/oder Walzen mit glatten und/oder strukturierten Walzen und/- oder Spachteln und/oder Rastertiefdruck und/oder Haschurenwalzen und/oder Reverserollverfahren mit glatten und/oder strukturierten Walzen und/oder Kisscoatauftrag und/oder Spritzauftrag und/oder Dosierung mit einem Drahtrakel aufgebracht werden.

Eine besondere blasenfreier und planer Film entsteht, wenn das die Beschichtung nach dem Auftragen bei Temperaturen von etwa 40 °C bis 230 °C, vorzugsweise bei etwa 80 °C bis 100 °C ausgehärtet wird. Die Trocknungstemperaturen sind in diesem Verfahren besonders niedrig. Die Beschichtung und/oder Trocknung kann in herkömmlichen Maschinen zu Papierbeschichtung und/oder Papierimprägnierung vorgenommen werden, ohne diese umrüsten zu müssen.

Vorteilhaft ist es, wenn nach dem Trocknen bzw. Aushärten des ersten Belags ein zweiter Auftrag bestehend aus einem insbesondere säurehärtenden, wasserverdünnbaren und/oder einem wässrigen isocyanatvernetzenden und/oder strahlungshärtenden Lack zur Oberflächenmodifikation aufgetragen wird.

Ebenfalls vorteilhaft ist eine Verwendung des Beschichtungsmaterials zum Beschichten einer Trägerbahn, zur Herstellung einer flexiblen, dekorativen Folie nach einem der Ansprüche 1 bis 8.

Die Aufgabe wird ebenfalls gelöst durch eine Verwendung einer flexiblen, dekorativen Folie nach einem der Ansprüche 1 bis 8, mit einer Beschichtung aus einem Beschichtungsmaterial, zur Ummantelung und/- oder Beschichtung eines Werkstoffes, insbesondere im Holzwerkstoffbereich, insbesondere zur Herstellung von Fußbodenbelägen oder Fußbodenleisten.

Durch die vorgeschlagene Erfindung kann somit einerseits ein Fußbodenbelag in Form einer dicken Folie hergestellt werden als auch die zugehörigen Leisten im selben Beschichtungsmaterial individuell angepasst werden.

Vorteilhaft ist es, wenn die Folie auf einem Holzwerkstoff zur Bodenabdeckung verpresst ist, insbesondere auf einer Spanplatte und/oder eine MDF- und/oder HDF-Platte. Die Platten wirken zusätzlich stabilisierend und sind in Modulbauweise verlegbar.

## Patentansprüche

1. Flexible, dekorative Folie mit einer Trägerbahn und einer Beschichtung aus einem Beschichtungsmaterial, wobei die Trägerbahn aus Papier besteht, das ein Gewicht von 25 bis 300 g/m² aufweist, wobei die Beschichtung eine Schichtstärke von 10 g/m² bis 180 g/m² aufweist,
und wobei die Beschichtung eine erste, eine zweite und eine dritte Komponente aufweist, welche vor der Beschichtung vermischt wurden und bei der Beschichtung eine elastische Beschichtung lieferten,
und wobei die erste Komponente eine OH-gruppenhaltige Harzlösung, eine OH-gruppenhaltige Harzdispersion und/oder eine wasserverdünnbare OH-gruppenhaltige Harzemulsion aufweist,
die zweite Komponente ein wasseremulgierbares Polyisocyanatharz in einem Gewichtsanteil von 10% bis 100% aufweist
und die dritte Komponente ein Metalloxid, Silicid, Borid, Nitrid, Carbid, eine metallische Hartlegierung oder Mischungen daraus umfasst.

2. Folie nach wenigstens einem der vorhergehenden Ansprüche, wobei die erste Komponente eine wasserverdünnbare OH-gruppenhaltige Harzemulsion aufweist, die eine Acrylatemulsion ist.

3. Folie nach wenigstens einem der vorhergehenden Ansprüche, wobei die erste Komponente ein Hydroxylpolyesterharz umfasst.

4. Folie nach wenigstens einem der vorhergehenden Ansprüche, wobei die dritte Komponente Aluminiumoxid, Zirkonoxid, Wolframcarbid und/oder Siliciumcarbid umfasst.

5. Folie nach wenigstens einem der vorhergehenden Ansprüche, wobei die dritte Komponente Aluminiumoxid umfasst.

6. Folie nach wenigstens einem der vorhergehenden Ansprüche, wobei die erste Komponente ein Polyacrylat aufweist, das aus einem oder mehreren der Monomere Ethylacrylat, Butylacrylat, Styrol, Hydroxyethylmethacrylat und Hydroxyethylmethacrylat aufgebaut ist.

7. Folie nach Anspruch 6, wobei das Polyacrylat eine oder mehrere der folgenden funktionellen Gruppen aufweist: Hydroxyl, Methylol, Carboxyl und Amino.

8. Folie nach wenigstens einem der vorhergehenden Ansprüche, wobei die erste Komponente einen Gewichtsanteil von 40% bis 80%, die zweite Komponente einen Gewichtsanteil von 2% bis 50% und die dritte Komponente einen Gewichtsanteil von 10% bis 50% an der Beschichtung aufweist.

9. Verwendung einer Folie nach einem der vorhergehenden Ansprüche zur Ummantelung und/oder Beschichtung eines Werkstoffes.

10. Verwendung nach Anspruch 9 zur Herstellung von Fußbodenbelägen oder Eußbodenleisten.

## Claims

1. A flexible, decorative film comprising a carrier sheet material and a coating made of a coating material, wherein the carrier sheet material consists of paper having a weight of 25 to 300 g/m², wherein the coating has a layer weight of 10 g/m² to 180 g/m²,
and wherein the coating comprises a first, a second and a third component, which have been mixed before the coating step and resulted with the coating step in an elastic coating,
and wherein the first component comprises an OH-group-containing resin solution, an OH-group-containing resin dispersion and/or a water-dilutable OH-group-containing resin emulsion,
the second component comprises a water-emulsifiable polyisocyanate resin in a weight proportion of 10 % to 100 %,
and the third component comprises a metal oxide, silicide, boride, nitride, carbide, a hard metallic alloy or mixtures thereof.

2. The film according to at least one of the preceding claims, wherein the first component comprises a water-dilutable OH-group-containing resin emulsion which is an acrylate emulsion.

3. The film according to at least one of the preceding claims, wherein the first component comprises a hydroxyl polyester resin.

4. The film according to at least one of the preceding claims, wherein the third component comprises aluminum oxide, zirconium oxide, tungsten carbide and/or silicon carbide.

5. The film according to at least one of the preceding claims, wherein the third component comprises aluminum oxide.

6. The film according to at least one of the preceding claims, wherein the first component comprises a polyacrylate which is composed of one or more monomers selected from ethyl acrylate, butyl acrylate, styrene, hydroxyethyl methacrylate and hydroxyethyl methacrylate.

7. The film according to claim 6, wherein the polyacrylate comprises one or more of the following functional groups: hydroxyl, methylol, carboxyl and amino.

8. The film according to at least one of the preceding claims, wherein the first component has a weight proportion of 40 % to 80 %, the second component has a weight proportion of 2 % to 50 % and the third component has a weight proportion of 10 % to 50 % of the coating.

9. A use of a film according to one of the preceding claims for encasing and/or coating a material.

10. The use according to claim 9 for the production of floor coverings or floor skirting boards.

## Revendications

1. Film décoratif flexible, comportant une bande de support et un revêtement en matériau de revêtement, dans lequel la bande de support consiste en papier qui présente un poids de 25 à 300 g/m², dans lequel le revêtement présente une épaisseur de couche de 10 g/m² à 180 g/m²,
et dans lequel le revêtement présente un premier, un deuxième et un troisième composant qui ont été mélangés avant le revêtement et assurent lors du revêtement, un revêtement élastique,
et dans lequel le premier composant présente une solution de résine contenant des groupes OH, une dispersion de résine contenant des groupes OH et/ou une émulsion de résine contenant des groupes OH diluable dans l'eau,
le deuxième composant présente une résine polyisocyanate pouvant être émulsionnée dans l'eau en une proportion en poids de 10% à 100 %
et le troisième composant comprend un oxyde métallique, un siliciure, un borure, un nitrure, un carbure, un alliage métallique dur ou des mélanges de ceux-ci.

2. Film selon au moins l'une des revendications précédentes, dans lequel le premier composant est une émulsion de résine contenant des groupes OH diluable dans l'eau, qui est une émulsion d'acrylate.

3. Film selon au moins l'une des revendications précédentes, dans lequel le premier composant comprend une résine hydroxylpolyester.

4. Film selon au moins l'une des revendications précédentes, dans lequel le troisième composant comprend un oxyde d'aluminium, un oxyde de zirconium, un carbure de tungstène et/ou un carbure de silicium.

5. Film selon au moins l'une des revendications précédentes, dans lequel le troisième composant comprend un oxyde d'aluminium.

6. Film selon au moins l'une des revendications précédentes, dans lequel le premier composant présente un polyacrylate qui est constitué d'un ou plusieurs des monomères éthylacrylate, butylacrylate, styrène, hydroxyéthylméthacrylate et hydroxyéthylméthacrylate.

7. Film selon la revendication 6, dans lequel le polyacrylate présente un ou plusieurs des groupes fonctionnels suivants : hydroxyle, méthylol, carboxyle et amino.

8. Film selon au moins l'une des revendications précédentes, dans lequel le premier composant présente une proportion en poids de 40 % à 80 %, le deuxième composant présente une proportion en poids de 2 % à 50 % et le troisième composant présente une proportion en poids de 10 % à 50 % du revêtement.

9. Utilisation d'un film selon l'une des revendications précédentes, pour l'enrobage et/ou le revêtement d'un matériau.

10. Utilisation selon la revendication 9, pour la fabrication de revêtements de sols ou de plinthes.
